# EUROPÄISCHE PATENTSCHRIFT

(11) **EP 3 419 879 B1**
(45) Veröffentlichungstag und Bekanntmachung des Hinweises auf die Patenterteilung: **27.05.2020**
(21) Anmeldenummer: 17717151.9
(22) Anmeldetag: 12.04.2017
(51) Int. Cl.: B60T 13/66, B61L 23/34, B61L 27/00, B61L 3/00, B60T 17/22

(54) **VERFAHREN UND VORRICHTUNG ZUR BESTIMMUNG EINES SICHEREN BREMSWERTS EINES SCHIENENFAHRZEUGS**
METHOD AND APPARATUS FOR DETERMINING A SAFE BRAKING VALUE OF A RAIL VEHICLE
PROCÉDÉ ET DISPOSITIF POUR DÉTERMINER UNE PUISSANCE DE FREINAGE SÛRE D'UN VÉHICULE FERROVIAIRE

(30) Priorität: 26.04.2016 DE 102016207011
(43) Veröffentlichungstag der Anmeldung: 02.01.2019
(73) Patentinhaber: Siemens Mobility GmbH, 81739 München (DE)
(72) Erfinder: DICKGIESSER, Boris, 38102 Braunschweig (DE); FRITZSCH, Guido, 10435 Berlin (DE); ISAILOVSKI, Aleksandar, 13156 Berlin (DE); SAMSON, Michael, 10115 Berlin (DE); WEGELE, Stefan, 38126 Braunschweig (DE)
(86) Internationale Anmeldenummer: PCT/EP2017/058728
(87) Internationale Veröffentlichungsnummer: WO 2017/186487

(56) Entgegenhaltungen:
- WO-A2-2013/135393
- DE-A1-102011 052 545
- DE-A1-102014 203 751

## Beschreibung

In einer eisenbahntechnischen Anlage ist für jede Eisenbahnstrecke definiert, wie stark ein Bremsvermögen eines Schienenfahrzeugs sein muss, damit dieses mit der vollen zulässigen Streckengeschwindigkeit fahren darf. Falls das Bremsvermögen des Schienenfahrzeugs nicht ausreichend ist, muss die Geschwindigkeit des Schienenfahrzeugs reduziert werden.

Bei Fahrstrecken mit modernen Zugsicherungssystemen, wie beispielsweise ETCS Level 3, die im sogenannten Moving-Block befahren werden, hängt sowohl der Sicherheitsabstand als auch die zulässige Geschwindigkeit des Schienenfahrzeugs vom Bremsvermögen ab.

Die Hersteller der Schienenfahrzeuge ermitteln bremsrelevante Parameter des Schienenfahrzeugs, das sogenannte Bremsgewicht, und geben diese für das Schienenfahrzeug bei der Auslieferung an. Dieser Wert ist allerdings nur theoretisch erzielbar und wird im Betrieb durch großzügige Sicherheitsfaktoren verändert, was zum sicheren Bremswert führt. Diese Sicherheitsfaktoren oder Sicherheitsaufschläge werden sehr konservativ bestimmt, da es sich um sicherheitsrelevante Informationen handelt. Dadurch wird die erzielbare Kapazität der Eisenbahninfrastruktur begrenzt und Fahrzeiten der Schienenfahrzeuge verlängern sich. Die maßgebende Vorschrift zur Bremswirkungsabschätzung ist das "UIC-Merkblatt 544-1".

In der DE 10 2014 203 751 A1 ist ein Schienenfahrzeug mit einer Berechnungsmöglichkeit für ein Bremsvermögen beschrieben.

Es ist daher die Aufgabe der vorliegenden Erfindung, ein Verfahren und eine Vorrichtung bereitzustellen, mit denen ein sicherer Bremswert eines Schienenfahrzeugs genauer bestimmt werden kann, um eine zulässige Höchstgeschwindigkeit genauer zu bestimmen und dadurch eine Kapazitätsauslastung einer eisenbahntechnischen Anlage zu erhöhen.

Diese Aufgabe wird gelöst durch ein Verfahren nach Anspruch 1 zur Bestimmung eines sicheren Bremswerts eines Schienenfahrzeugs, der für ein aktuelles Bremsvermögen repräsentativ und von einer Zugsteuereinrichtung verwendbar ist, bei dem ein Sicherheitsintervall regelmäßig bestimmt wird, in dem das aktuelle Bremsvermögen des Schienenfahrzeugs mit einer vorbestimmten Sicherheit liegt, und bei dem der sichere Bremswert anhand des Sicherheitsintervalls festgesetzt wird.

Ferner wird die Aufgabe gelöst durch eine Vorrichtung nach Anspruch 9 zur Bestimmung eines sicheren Bremswerts eines Schienenfahrzeugs, der für ein Bremsvermögen repräsentativ und von einer Zugsteuerungseinrichtung des Schienenfahrzeugs verwendbar ist, mit wenigstens einer Bestimmungseinrichtung zum Bestimmen eines Sicherheitsintervalls, in dem das aktuelle Bremsvermögen des Schienenfahrzeugs mit einer vorbestimmten Sicherheit liegt, und mit wenigstens einer Recheneinrichtung, die zum Festsetzen des sicheren Bremswerts anhand des Sicherheitsintervalls ausgebildet ist.

Die erfindungsgemäße Lösung hat den Vorteil, dass der sichere Bremswert und damit ein aktuelles Bremsvermögen des Schienenfahrzeugs genau bestimmt werden kann. Dadurch erhöht sich die Sicherheit innerhalb einer eisenbahntechnischen Anlage, weil von der Zugsicherungseinrichtung nur realistische Bremswerte verwendet werden, und auch deren Kapazität kann erhöht werden, weil unnötig hohe Sicherheitsaufschläge vermieden werden können.

Bei dem erfindungsgemäßen Verfahren und der erfindungsgemäßen Vorrichtung wird eine seit der letzten Bremsung des Schienenfahrzeugs vergangene Zeit bei der Abschätzung des Sicherheitsintervalls berücksichtigt. Dies hat den Vorteil, dass die zunehmende Wahrscheinlichkeit berücksichtigt wird, mit der sich der Zustand des Schienenfahrzeugs mit der Zeit verändert. Mit der Zeit vergrößert sich dadurch das Sicherheitsintervall, um nicht abschätzbare Einflussgrößen berücksichtigt werden müssen. Bei einer erneuten Bremsung kann das Sicherheitsintervall dann wieder reduziert werden, weil dabei das aktuelle Bremsvermögen erneut ermittelt worden ist.

Die erfindungsgemäße Lösung kann durch vorteilhafte Ausgestaltungen weiterentwickelt werden, die im Folgenden beschrieben sind.

So kann bei dem erfindungsgemäßen Verfahren der sichere Bremswert in Abhängigkeit von einer Untergrenze des Sicherheitsintervalls festgesetzt werden. Die Untergrenze des Sicherheitsintervalls gibt einen sicheren Wert an, in dem das aktuelle Bremsvermögen des Schienenfahrzeugs liegt. Der sichere Bremswert kann beispielsweise mit einem festen Abstand unterhalb der Untergrenze des Sicherheitsintervalls festgesetzt werden, so dass auch bei Schwankungen des Sicherheitsintervalls der sichere Bremswert nicht sofort verändert werden muss.

Um den aktuellen Zustand des Schienenfahrzeugs bei der Bestimmung des Sicherheitsintervalls zu berücksichtigen, kann bei einer Bremsung des Schienenfahrzeugs wenigstens ein Fahrzeugparameter ermittelt und bei der Bestimmung des Sicherheitsintervalls berücksichtigt werden. Bei einer Bremsung kann die Breite des Sicherheitsintervalls reduziert werden, weil in diesem Moment das aktuelle Bremsvermögen des Schienenfahrzeugs anhand von Fahrzeugparametern, wie beispielsweise der Geschwindigkeitsreduzierung, sehr genau bestimmt werden kann.

Um äußere Einflüsse auf das Schienenfahrzeug berücksichtigen zu können, können Umweltparameter, insbesondere eine Feuchtigkeit der Luft oder Fahrstrecke, Außentemperatur oder eine Neigung der Fahrstrecke, bei der Abschätzung des Sicherheitsintervalls berücksichtigt werden. So kann das Sicherheitsintervall noch genauer bestimmt werden. Beispielsweise reduziert sich das Bremsvermögen des Schienenfahrzeugs, wenn es regnet und dadurch die Schienen feucht sind.

Ferner können Fahrzeugparameter des Schienenfahrzeugs, insbesondere eine eingestellte Bremsanforderung und die Geschwindigkeit, bei der Abschätzung es Sicherheitsintervalls berücksichtigt werden. Die eingestellte Bremsanforderung ist beispielsweise ein voreingestelltes Bremsprofil, mit dem das Schienenfahrzeug bei einer Bremsung abbremst. Diese eingestellte Bremsanforderung wird beispielsweise durch den Triebfahrzeugführer an einen Bremshebel des Schienenfahrzeugs voreingestellt. Hier kann beispielsweise zwischen einer Vollbremsung, Schnellbremsung, Notbremsung, Zwangsschnellbremsung und Zwangsvollbremsung unterschieden werden, die sich jeweils in ihrer Bremskurve unterscheiden.

Um das sichere Betreiben des Schienenfahrzeugs zu jeder Zeit zu gewährleisten, kann der sichere Bremsweg reduziert oder eine Bremsung ausgelöst werden, wenn eine Untergrenze des Sicherheitsintervalls einen festgelegten Abstand zum bisherigen sicheren Bremswert erreicht oder unterscheidet. Zwischen der Reduzierung und der Bremsung kann auch in Abhängigkeit von einem aktuellen Fahrplan entschieden werden. Anhand des Fahrplans kann nämlich herausgefunden werden, wo ein Optimum zwischen einem vergrößerten Zugabstand und einer längeren Zugfahrt gefunden werden kann. Dafür kann beispielsweise als Hilfsgröße eine Verspätung des Schienenfahrzeugs und/oder ein zusätzlicher Energieverbrauch des Schienenfahrzeugs für verschiedene Fälle berechnet werden. Diese Fälle sind beispielsweise eine sofortige Bremsung, ein Abwarten bis zur nächsten Station mit geplantem Halt oder ein Abwarten bis zu einem Abschnitt mit weniger dichtem Schienenverkehr. Hierdurch kann entschieden werden, welche Maßnahme für die gesamte eisenbahntechnische Anlage am sinnvollsten ist, die dann umgesetzt wird.

Die Erfindung betrifft weiterhin ein Verfahren zum Steuern eines Schienenfahrzeugs, bei dem ein sicherer Bremsweg des Schienenfahrzeugs nach den erfindungsgemäßen Verfahren nach einer der oben genannten Ausführungsformen bestimmt wird, das Schienenfahrzeug gemäß ETCS Level 3 betrieben wird und der sichere Bremsweg zur Berechnung eines Sicherheitsabstands und einer zulässigen Höchstgeschwindigkeit für das Schienenfahrzeug verwendet wird.

Im Folgenden wird die Erfindung mit Bezug auf die beigefügten Zeichnungen erläutert.

Es zeigen:
- Figur 1: eine schematische Darstellung einer beispielhaften Ausführungsform einer erfindungsgemäßen Vorrichtung zur Bestimmung eines sicheren Bremswerts;
- Figur 2: eine schematische Darstellung eines zeitlichen Verlaufs des Sicherheitsintervalls und des sicheren Bremswerts eines Schienenfahrzeugs, die von der Vorrichtung in Figur 1 ermittelt worden sind;
- Figur 3: eine schematische Darstellung einer eisenbahntechnischen Anlage, in der das erfindungsgemäße Verfahren angewendet wird.

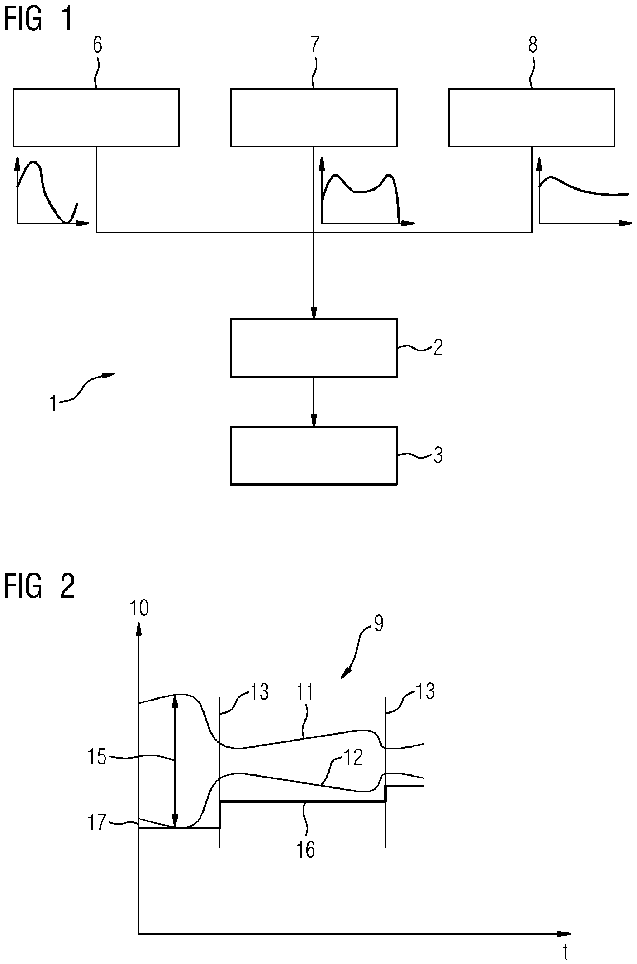

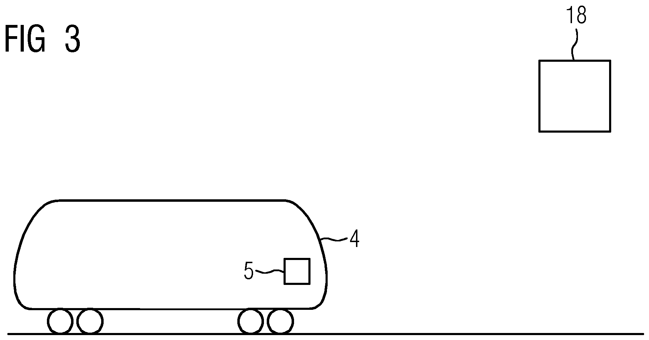

Figur 1 zeigt eine beispielhafte Ausführungsform einer erfindungsgemäßen Vorrichtung 1 zur Bestimmung eines sicheren Bremswerts, die eine Bestimmungseinrichtung 2 und eine Recheneinrichtung 3 aufweist. Die erfindungsgemäße Vorrichtung 1 ist zur Bestimmung des sicheren Bremswerts ausgebildet, der für ein Bremsvermögen eines Schienenfahrzeugs 4 repräsentativ und von einer Zugsteuerungseinrichtung 5 des Schienenfahrzeugs 4 verwendbar ist. Die Vorrichtung 1 kann in dem in Figur 3 gezeigten Schienenfahrzeug 4 oder in einer ebenfalls in Figur 3 gezeigten Leitstelle 18 eingesetzt werden.

Die Bestimmungseinrichtung 2 erhält als Eingangsgrößen einerseits Fahrzeugparameter des Schienenfahrzeugs 4 wie eine eingestellte Bremsanforderung 6, die beispielsweise anhand einer Bremshebelstellung des Schienenfahrzeugs 4 ermittelt wird, und eine Geschwindigkeit 7 des Schienenfahrzeugs 4. Weiterhin erhält die Bestimmungseinrichtung 2 als weitere Eingangsgänge verschiedene Umweltparameter 8, wie eine Außentemperatur, einen Wert für die Feuchtigkeit der Luft oder der Fahrstrecke und/oder einen Wert für die Neigung der Fahrstrecke, die das Schienenfahrzeug gerade befährt. Aus diesen Eingangsgrößen bestimmt die Bestimmungseinrichtung 2 ein Sicherheitsintervall 9, dessen zeitlicher Verlauf in Figur 2 dargestellt ist. Das Sicherheitsintervall 9 ist ein Bereich, in dem das aktuelle Bremsvermögen des Schienenfahrzeugs 4 liegt. Das Diagramm in Figur 2 zeigt auf der Y-Achse das Bremsvermögen 10 und auf der X-Achse die Zeit t. Das Sicherheitsintervall 9 hat eine Obergrenze 11 und eine Untergrenze 12, zwischen denen das aktuelle wahre Bremsvermögen des Schienenfahrzeugs 4 mit einer vorbestimmten ausreichenden Sicherheit liegt. Das Bremsvermögen des Schienenfahrzeugs 4 und damit die Obergrenze 11 und Untergrenze 12 des Sicherheitsintervalls 9 kann sich ständig ändern. Die Änderungen sind zum einen bedingt beispielsweise durch die oben genannten Fahrzeugparameter und Umweltparameter 8. Die Fahrzeugparameter ändern sich beispielsweise in Abhängigkeit von der Temperatur, einer Alterung und vor allem auch der Ladung. Die Umweltparameter 8 ändern beispielsweise einen Bremskoeffizienten zwischen der Schiene und den Rädern des Schienenfahrzeugs 4. Selbstverständlich hat auch die eingestellte Bremsanforderung 6 Einfluss auf das Sicherheitsintervall 9. Zum anderen muss eine Ungenauigkeit in der Abschätzung des aktuellen Bremsvermögens mit berücksichtigt werden, die sich mit der Zeit ändert.

In dem Diagramm in Figur 2 sind in zeitlichem Abstand beispielhaft zwei Bremsungen 13 eingezeichnet. Typischerweise reduziert sich die Breite 15 des Intervalls 9 mit jeder Bremsung 13, weil bei einer Bremsung 13 das aktuelle Bremsvermögen des Schienenfahrzeugs 4 tatsächlich anhand der Reduzierung der Fahrzeuggeschwindigkeit relativ genau ermittelt werden kann. Dadurch kann die Breite 15 des Sicherheitsintervalls 9 bei jeder Bremsung 13 reduziert werden. Andererseits erhöht sich die Breite 15 des Sicherheitsintervalls 9 mit der Zeit während der Fahrt des Schienenfahrzeugs 4, weil die durch die Breite 15 ausgedrückte Unsicherheit größer wird, wo das aktuelle Bremsvermögen des Schienenfahrzeugs liegt.

Anhand des von der Bestimmungseinrichtung 2 abgeschätzten Sicherheitsintervalls 9 setzt die Recheneinrichtung 3 einen sicheren Bremswert 16 für das Schienenfahrzeug 4 fest, der mit der Zeit angepasst werden kann.

Der sichere Bremswert 16 wird von der Zugsteuereinrichtung 5, die beispielsweise gemäß ETCS Level 3 arbeitet, zur Bestimmung des Sicherheitsabstands und der zulässigen Geschwindigkeit des Schienenfahrzeugs 4 verwenden. Um den sicheren Bremswert 16 nicht permanent ändern zu müssen, wird dieser zunächst mit einem gewissen Abstand 17 zur Untergrenze 12 des Sicherheitsintervalls 9 festgesetzt. So kann sich die Untergrenze 12 des Sicherheitsintervalls 9 mit der Zeit bis zu einem gewissen Wert ändern, ohne dass der sichere Bremswert geändert werden muss.

Sobald die Untergrenze 12 des Sicherheitsintervalls 9 in die Nähe des sicheren Bremswerts 16 kommt oder einen vorbestimmten Abstand unterschreitet, muss entweder eine Bremsung 13 des Schienenfahrzeugs 4 durchgeführt werden oder der sichere Bremswert 16 reduziert werden. Die Reduzierung des sicheren Bremswerts 16 hat selbstverständlich zur Folge, dass der Abstand zu einem vorausfahrenden Schienenfahrzeug erhöht werden muss. Anhand eines aktuellen Fahrplans kann bestimmt werden, ob der vergrößerte Abstand zum vorausfahrenden Schienenfahrzeug und dadurch eine längere Fahrt des Schienenfahrzeugs 4 akzeptabel ist. Hierfür kann eine Verspätung und ein zusätzlicher Energieverbrauch des Schienenfahrzeugs 4 für verschiedene Varianten geprüft werden. Als Varianten kommen z. B. in Frage: Eine sofortige Bremsung 13, eine Reduzierung des sicheren Bremswerts 16 mit einem Abwarten bis zur nächsten Station mit geplantem Halt für das Schienenfahrzeug 4 oder einem Abwarten bis zu einem Abschnitt mit weniger dichtem Verkehr, wo eine Vergrößerung des Abstands zu einem vorausfahrenden Schienenfahrzeug weniger Einfluss hat.

Das erfindungsgemäße Verfahren kann auch flottenweise, also auf vielen Schienenfahrzeugen 4, kalibriert werden, um genügend Daten für einen allgemeinen Sicherheitsnachweis zu erhalten. Nach dem Sicherheitsnachweis können Ergebnisse für ein dynamisches Anpassen von ETCS relevanten Zugparametern eingesetzt werden.

In Figur 3 ist das Schienenfahrzeug 4 mit einer fahrzeugseitigen Zugsteuereinrichtung 5 schematisch dargestellt. Die Leitstelle 18 ist dem Schienenfahrzeug 4 zugeordnet und mit ihm über Funk, wie GSM-R, verbunden. Die erfindungsgemäße Vorrichtung 1 kann entweder auf dem Schienenfahrzeug 4 oder auch in der Leitstelle 18 angeordnet sein.

Wenn die erfindungsgemäße Vorrichtung 1 in der Leitstelle 18 angeordnet ist und dort das erfindungsgemäße Verfahren durchgeführt wird, ist dessen Implementierung besonders einfach. Dabei können die Bremsanforderungen 6 von dem Schienenfahrzeug 4 auch nachträglich heruntergeladen werden. Weiterhin können Spitzenfahrten aufgesetzt werden, um sicherzugehen, dass beispielsweise eine automatische Zugsteuerung einen maximalen Bremswert verwendet.

Ferner können auch ETCS Standorttelegramme zur Ermittlung der realen Geschwindigkeit verwendet werden.

Durch das erfindungsgemäße Verfahren können dichtere Zugfolgen einer eisenbahntechnischen Anlage und damit eine Kapazitätserhöhung der Infrastruktur erreicht werden.

## Patentansprüche

1. Verfahren zur Bestimmung eines sicheren Bremswertes (16) eines Schienenfahrzeugs, der für ein aktuelles Bremsvermögen repräsentativ und von einer Zugsteuerungseinrichtung (5) verwendbar ist, bei dem ein Sicherheitsintervall (9) regelmäßig bestimmt wird, in dem das aktuelle Bremsvermögen des Schienenfahrzeugs (4) mit einer vorbestimmten Sicherheit liegt, und bei dem der sichere Bremswert (16) anhand des Sicherheitsintervalls (9) festgesetzt wird,
**dadurch gekennzeichnet, dass**
eine seit der letzten Bremsung (13) des Schienenfahrzeugs (4) vergangene Zeit (t) bei der Abschätzung des Sicherheitsintervalls (9) berücksichtigt wird.

2. Verfahren nach Anspruch 1,
**dadurch gekennzeichnet, dass**
der sichere Bremswert (16) in Abhängigkeit von einer Untergrenze (12) des Sicherheitsintervalls (9) festgesetzt wird.

3. Verfahren nach Anspruch 1 oder 2,
**dadurch gekennzeichne**t, dass
bei einer Bremsung (13) des Schienenfahrzeugs (14) wenigstens ein Fahrzeugparameter ermittelt und bei der Bestimmung des Sicherheitsintervalls (9) berücksichtigt wird.

4. Verfahren nach einem der oben genannten Ansprüche,
**dadurch gekennzeichnet, dass** Umweltparameter, insbesondere Feuchtigkeit der Luft oder Fahrstrecke, Außentemperatur oder eine Neigung der Fahrstrecke, bei der Abschätzung des Sicherheitsintervalls (9) berücksichtigt werden.

5. Verfahren nach einem der oben genannten Ansprüche,
**dadurch gekennzeichnet, dass** Fahrzeugparameter des Schienenfahrzeugs, insbesondere eine eingestellte Bremsanforderung (6) und die Geschwindigkeit 87), bei der Abschätzung des Sicherheitsintervalls (9) berücksichtigt werden.

6. Verfahren nach einem der oben genannten Ansprüche,
**dadurch gekennzeichnet, dass**
der sichere Bremswert (16) reduziert oder eine Bremsung (13) ausgelöst wird, wenn eine Untergrenze (12) des Sicherheitsintervalls (9) einen festgelegten Abstand zum bisherigen sicheren Bremswert (16) erreicht.

7. Verfahren nach Anspruch 6,
**dadurch gekennzeichne**t, dass zwischen Reduzierung und Bremsung in Abhängigkeit von einem Fahrplan entschieden wird.

8. Verfahren zum Steuern eines Schienenfahrzeugs (4),
**dadurch gekennzeichnet, dass**
ein sicherer Bremswert (16) des Schienenfahrzeugs (4) nach dem Verfahren nach einem der oben genannten Ansprüche bestimmt wird, das Schienenfahrzeug (4) gemäß ETCS Level 3 betrieben wird und der sichere Bremswert (16) zur Berechnung eines Sicherheitsabstandes und einer Höchstgeschwindigkeit für das Schienenfahrzeug (4) verwendet wird.

9. Vorrichtung zur Bestimmung eines sicheren Bremswertes (16) eines Schienenfahrzeugs, der für ein Bremsvermögen repräsentativ und von einer Zugsteuerungseinrichtung (5) des Schienenfahrzeugs (4) verwendbar ist, mit wenigstens einer Bestimmungseinrichtung (2) zum Bestimmen eines Sicherheitsintervalls (9), in dem das aktuelle Bremsvermögen des Schienenfahrzeugs (4) mit einer vorbestimmten Sicherheit liegt, und mit wenigstens einer Recheneinrichtung (3), die zum Festsetzen des sicheren Bremswerts anhand des Sicherheitsintervalls (9) ausgebildet ist,
**dadurch gekennzeichnet, dass**
die Bestimmungseinrichtung (2) ausgebildet ist, eine seit der letzten Bremsung (13) des Schienenfahrzeugs (4) vergangene Zeit (t) bei der Abschätzung des Sicherheitsintervalls (9) zu berücksichtigen.

## Claims

1. Method for determining a safe braking value (16) of a rail vehicle, which is representative of a current braking capacity and can be used by a train control device (5), in which a safety interval (9) is regularly determined in which the current braking capacity of the rail vehicle (4) lies with a predetermined level of safety, and in which the safe braking value (16) is stipulated on the basis of the safety interval (9),
**characterised in that**
a time (t) elapsed since the last braking (13) of the rail vehicle (4) is taken into account when estimating the safety interval (9).

2. Method according to claim 1,
**characterised in that**
the safe braking value (16) is stipulated as a function of a lower limit (12) of the safety interval (9).

3. Method according to claim 1 or 2,
**characterised in that**
during braking (13) of the rail vehicle (14) at least one vehicle parameter is determined and is taken into account when determining the safety interval (9).

4. Method according to one of the above claims,
**characterised in that**
environmental parameters, in particular humidity of the air or route, outside temperature or an incline in the route, are taken into account when estimating the safety interval (9).

5. Method according to one of the above claims,
**characterised in that**
vehicle parameters of the rail vehicle, in particular a set braking request (6) and the speed (87), are taken into account when estimating the safety interval (9).

6. Method according to one of the above claims,
**characterised in that**
the safe braking value (16) is reduced or braking (13) is triggered when a lower limit (12) of the safety interval (9) reaches a stipulated distance from the previous safe braking value (16).

7. Method according to claim 6,
**characterised in that**
a decision is made between reduction and braking as a function of a timetable.

8. Method for controlling a rail vehicle (4),
**characterised in that**
a safe braking value (16) of the rail vehicle (4) is determined according to the method according to one of the above claims, the rail vehicle (4) is operated according to ETCS Level 3 and the safe braking value (16) is used to calculate a safety distance and a maximum speed for the rail vehicle (4).

9. Device for determining a safe braking value (16) of a rail vehicle, which is representative of a braking capacity and can be used by a train control device (5) of the rail vehicle (4), having at least one determination device (2) for determining a safety interval (9) in which the current braking capacity of the rail vehicle (4) lies with a predetermined level of safety, and having at least one computing device (3) which is designed to stipulate the safe braking value on the basis of the safety interval (9),
**characterised in that**
the determination device (2) is designed to take into account a time (t) elapsed since the last braking (13) of the rail vehicle (4) when estimating the safety interval (9).

## Revendications

1. Procédé de détermination d'une valeur (16) de freinage sûre d'un véhicule ferroviaire, représentative d'un pouvoir de frein en cours et pouvant être utilisée par un dispositif (5) de commande de train, dans lequel on détermine régulièrement un intervalle (9) de confiance, dans lequel le pouvoir de frein en cours du véhicule (4) ferroviaire se trouve avec une confiance déterminée à l'avance, et dans lequel on fixe la valeur (6) de freinage sûre à l'aide de l'intervalle (9) de confiance,
**caractérisé en ce que**,
pour l'estimation de l'intervalle (9) de confiance, on tient compte d'un temps (t) passé depuis le dernier freinage (13) du véhicule (4) ferroviaire.

2. Procédé suivant la revendication 1,
**caractérisé en ce que**
l'on fixe la valeur (16) de freinage sûre en fonction d'une limite (12) inférieure de l'intervalle (9) de confiance.

3. Procédé suivant la revendication 1 ou 2,
**caractérisé en ce que**,
lors d'un freinage (13) du véhicule (14) ferroviaire, on détermine au moins un paramètre du véhicule et on en tient compte dans la détermination de l'intervalle (9) de confiance.

4. Procédé suivant l'une des revendications précédentes,
**caractérisé en ce que**
l'on tient compte de paramètres du milieu ambiant, notamment de l'humidité de l'air ou de la voie, de la température extérieure ou de l'inclinaison de la voie, lors de l'estimation de l'intervalle (9) de confiance.

5. Procédé suivant l'une des revendications précédentes,
**caractérisé en ce que**
l'on tient compte, comme paramètres du véhicule ferroviaire, notamment d'une demande (6) de freinage réglée et de la vitesse (87) lors de l'estimation de l'intervalle (9) de confiance.

6. Procédé suivant l'une des revendications précédentes,
**caractérisé en ce que**
l'on réduit la valeur (16) de freinage sûre ou on déclenche un freinage (13) si une limite (12) inférieure de l'intervalle (9) de confiance atteint un écart fixé à la valeur (16) de freinage sûre jusqu'ici.

7. Procédé suivant la revendication 6,
**caractérisé en ce que**
l'on décide entre une réduction et un freinage en fonction d'un plan de circulation.

8. Procédé de commande d'un véhicule (4) ferroviaire,
**caractérisé en ce que**
l'on détermine une valeur (16) de freinage sûre du véhicule (4) ferroviaire par le procédé suivant l'une des revendications précédentes, on fait fonctionner le véhicule (4) ferroviaire suivant ETCS level 3 et on utilise la valeur (16) de freinage sûre pour calculer un écart de sécurité et une vitesse la plus grande du véhicule (4) ferroviaire.

9. Système de détermination d'une valeur (16) de freinage sûre d'un véhicule ferroviaire, représentative d'un pouvoir de frein et pouvant être utilisée par un dispositif (5) de commande de train du véhicule (4) ferroviaire, comprenant au moins un dispositif (2) de détermination pour déterminer un intervalle (9) de confiance, dans lequel le pouvoir de frein en cours du véhicule (4) ferroviaire se trouve avec une confiance déterminée à l'avance, et comprenant au moins un dispositif (3) d'ordinateur, constitué pour fixer la valeur de freinage sûre à l'aide de l'intervalle (9) de confiance,
**caractérisé en ce que**
le dispositif (2) de détermination est constitué pour prendre en compte, lors de l'estimation de l'intervalle (9) de confiance, un temps (t) passé depuis le dernier freinage (13) du véhicule (4) ferroviaire.
